# EUROPEAN PATENT APPLICATION

(11) **EP 4 101 746 A1**
(43) Date of publication of application: **14.12.2022**
(21) Application number: 22176140.6
(22) Date of filing: 30.05.2022
(51) Int. Cl.: B62J 11/22, B62K 25/02

(54) **BICYCLE WHEEL QUICK RELEASE DEVICE CAPABLE OF BEING COMBINED WITH TOOL**

(30) Priority: 03.06.2021 TW 110206421 U
(71) Applicant: Lee Chi Enterprises Co., Ltd., Changhua City, Changhua County (TW)
(72) Inventor: TUNG, Ching-Lin, Changhua City, Changhua County (TW)
(74) Representative: Melchior, Robin

(57) **Abstract**

A bicycle wheel quick release device capable of being combined with a tool (100, 100') has a quick release assembly (10, 10') and a handle (20, 20'). The quick release assembly (10, 10') has a shaft (12, 12'), an axial hole (10a, 10a'), and a cap (14, 14') having a receiving groove (141, 141') communicating with the axial hole (10a, 10a'). The handle (20, 20') received in the axial hole (10a, 10a') and the receiving groove (141, 141') has at least two tool portions (26, 26'). Any tool portion (26, 26') can screw or unscrew a threaded component onto or from an object. Thereby, the handle (20, 20') is a multifunctional tool that can be used as a wrench for detaching or mounting the quick release assembly (10, 10') from or onto a bicycle frame.

## Description

### BACKGROUND

### 1. Field of the Invention

The present invention relates to bicycles, and more particularly to a bicycle wheel quick release device capable of being combined with a tool that has a multifunctional handle.

### 2. Description of Related Art

For better riding experience, professional bicycle riders tend to choose a bicycle frame, rims, a saddle, a handlebar, or other components on their own and assemble those components via disassembly and assembly tools such as screwdrivers or wrenches by themselves.

However, for some riders who do not have disassembly and assembly tools, they have to rent those tools from bicycle shops or additionally buy those tools, which may lead to inconvenience for the riders such as spending extra time or extra money. Furthermore, most riders do not carry those tools when riding. In some special situations such as any screw on bicycles getting loose, riders cannot tighten loose screws immediately without those tools, which not only causes damage to components on the bicycle and even endangers the riders' safety.

### SUMMARY OF THE INVENTION

To overcome the problems said above, the present invention tends to provide a bicycle wheel quick release device capable of being combined with a tool to mitigate or obviate the aforementioned problems.

The main objective of the present invention is to provide users with a bicycle wheel quick release device capable of being combined with a tool that has a multifunctional handle being able to be used as a wrench and capable of being stored inside the quick release device.

The bicycle wheel quick release device capable of being combined with a tool has a quick release assembly and a handle. The quick release assembly has a shaft, an axial hole defined inside the quick release assembly, and a cap. The cap is connected to the shaft and has a receiving groove communicating with the axial hole. The handle has a rod portion, a head portion, and at least two tool portions. The rod portion is movably received in the axial hole, and the head portion is connected to an end of the rod portion and is capable of being received in the receiving groove of the cap. The at least two tool portions are respectively located on the rod portion and the head portion, and are capable of being combined with a threaded component and screw or unscrew the threaded component onto or from an object.

Another bicycle wheel quick release device capable of being combined with a tool in accordance with the present invention has a quick release assembly and a handle. The quick release assembly has a shaft, an axial hole defined inside the quick release assembly, and a cap. The cap is connected to the shaft and has a receiving groove. The receiving groove communicates with the axial hole and has two side openings aligned with each other. The handle is pivotally connected to the cap of the quick release assembly and has a rod portion, an operating arm, and a tool portion. The rod portion is mounted through the cap of the quick release assembly, and the operating arm is connected to an end of the rod portion, is swingable relative to the cap, and protrudes out of one of the two side openings of the receiving groove. The tool portion is disposed on the rod portion, is capable of being received in the axial hole, and is capable of being combined with a threaded component to screw the threaded component onto an object or unscrew the threaded component from the object.

Thereby, the handle can be used not only as a wrench for detaching or mounting the quick release assembly from or onto a bicycle frame but also as a wrench for any threaded components. The threaded components said above may be bolts or screws but are not limited thereto, and the handle can screw or unscrew the threaded components onto or from an object. The object said above may be any component of a bicycle but is not limited thereto, or the object said above may also be any object other than the bicycle. When the handle is not in use, the handle can be stored in the axial hole of the quick release assembly.

Other objectives, advantages and novel features of the invention will become more apparent from the following detailed description when taken in conjunction with the accompanying drawings.

### BRIEF DESCRIPTION OF THE DRAWINGS

Fig. 1 is a perspective view of a bicycle wheel quick release device capable of being combined with a tool of a first preferred embodiment in accordance with the present invention;
Fig. 2 is another perspective view of the bicycle wheel quick release device capable of being combined with a tool in Fig. 1;
Fig. 3 is an exploded perspective view of the bicycle wheel quick release device capable of being combined with a tool in Fig. 1;
Fig. 4 is a cross-sectional side view of the bicycle wheel quick release device capable of being combined with a tool across line 4-4 in Fig. 1;
Fig. 5 is an operational perspective view of the bicycle wheel quick release device capable of being combined with a tool in Fig. 1;
Fig. 6 is another operational perspective view of the bicycle wheel quick release device capable of being combined with a tool in Fig. 1;
Fig. 7 is a partial exploded perspective view of a bicycle wheel quick release device capable of being combined with a tool of a second preferred embodiment in accordance with the present invention;
Fig. 8 is an operational perspective view of the bicycle wheel quick release device capable of being combined with a tool in Fig. 7;
Fig. 9 is a perspective view of a bicycle wheel quick release device capable of being combined with a tool of a third preferred embodiment in accordance with the present invention;
Fig. 10 is a side view of the bicycle wheel quick release device capable of being combined with a tool in Fig. 9;
Fig. 11 is a cross-sectional view of the bicycle wheel quick release device capable of being combined with a tool across line 11-11 in Fig. 10;
Fig. 12 is an operational perspective view of the bicycle wheel quick release device capable of being combined with a tool in Fig. 9; and
Fig. 13 is another operational perspective view of the bicycle wheel quick release device capable of being combined with a tool in Fig. 9.

### DETAILED DESCRIPTION OF THE INVENTION

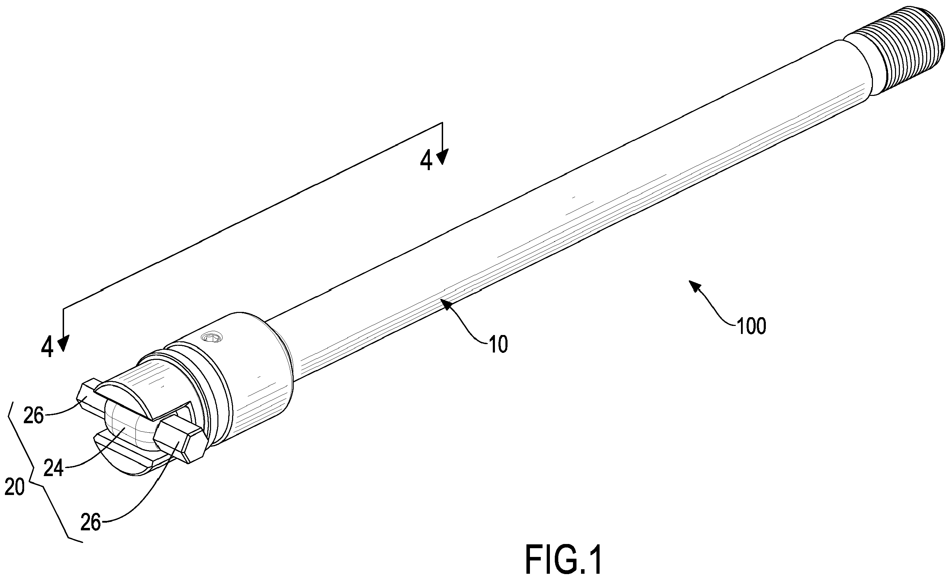

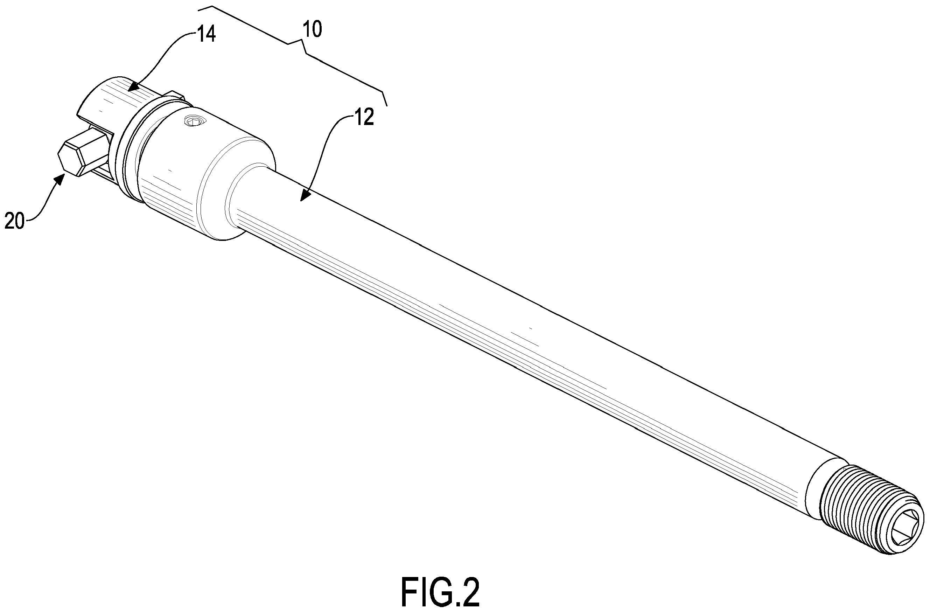

With reference to Figs. 1 to 6, a bicycle wheel quick release device capable of being combined with a tool 100 of a first preferred embodiment in accordance with the present invention is utilized for combining a bicycle wheel and a front fork or a rear fork of a bicycle frame. The bicycle wheel quick release device capable of being combined with a tool 100 has a quick release assembly 10 and a handle 20.

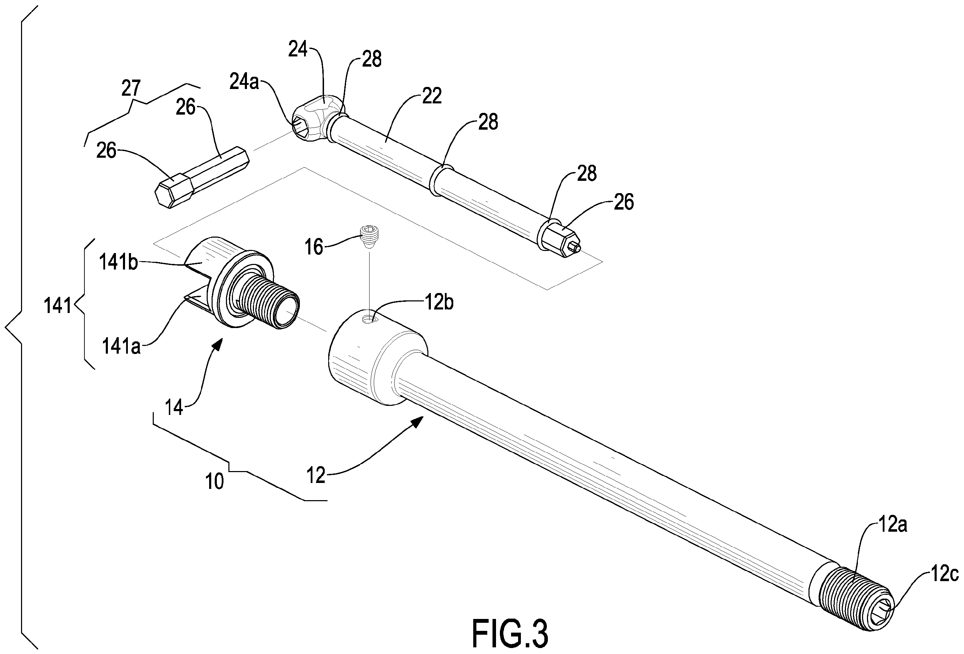

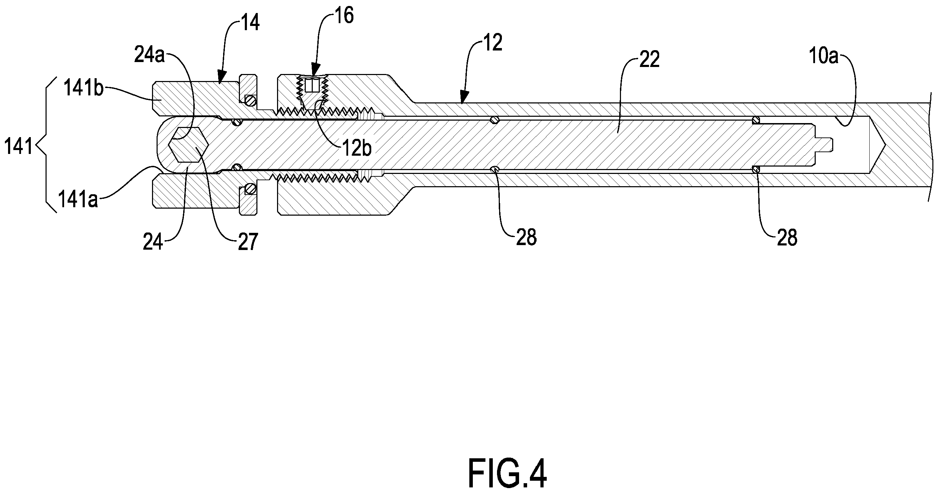

The quick release assembly 10 has a shaft 12, a cap 14, and an axial hole 10a. The cap 14 is connected to an end of the shaft 12, and the axial hole 10a is defined inside the shaft 12 and the cap 14. The shaft 12 has a threaded section 12a disposed on an outer peripheral surface of the shaft 12 away from the cap 14. The threaded section 12a is configured to be screwed onto a front fork or a rear fork of a bicycle frame and allows a bicycle wheel sheathed on the quick release assembly 10 to be detachably combined with the bicycle frame. The cap 14 has a receiving groove 141 communicating with the axial hole 10a. With reference to Figs. 3 and 4, the shaft 12 and the cap 14 are combined with each other via threads. To avoid the cap 14 inadvertently detaching from the shaft 12, the quick release assembly 10 further has a set screw 16. The set screw 16 is screwed into a threaded hole 12b formed through a shaft wall of the shaft 12, and an end of the set screw 16 protrudes out of the threaded hole 12b and abuts against a peripheral surface of the cap 14. In other embodiments, the shaft 12 and the cap 14 may be made of one piece.

The handle 20 has a rod portion 22, a head portion 24 connected to an end of the rod portion 22, and at least two tool portions 26. The rod portion 22 is movably received in the axial hole 10a, and the head portion 24 is capable of being received in the receiving groove 141. In the first embodiment, the rod portion 22 and the head portion 24 are made of one piece. The head portion 24 has a noncircular through hole 24a, and the handle 20 has a tool rod 27. With reference to Fig. 4, part of the tool rod 27 is in a shape fitting with a shape of the through hole 24a, so the tool rod 27 cannot rotate relative to the head portion 24 when being mounted through the through hole 24a. Two opposite ends of the tool rod 27 protrude out of the through hole 24a and each form a respective one of the at least two tool portions 26. In addition, one of said tool portions 26 is disposed at an end of the rod portion 22 located away from the head portion 24.

Overall, in this embodiment, the handle 20 actually has three said tool portions 26. Two of the three tool portions 26 are disposed on the head portion 24, and the other one of the three tool portions 26 is disposed on the rod portion 22. The three tool portions 26 are configured to be combined with various types of components such as bolts or screws and allow the handle 20 to be used as a wrench. In this embodiment, the shape of the through hole 24a is hexagonal, but the shape of the through hole 24a may also be triangular, rectangular, or other noncircular shapes in other embodiments.

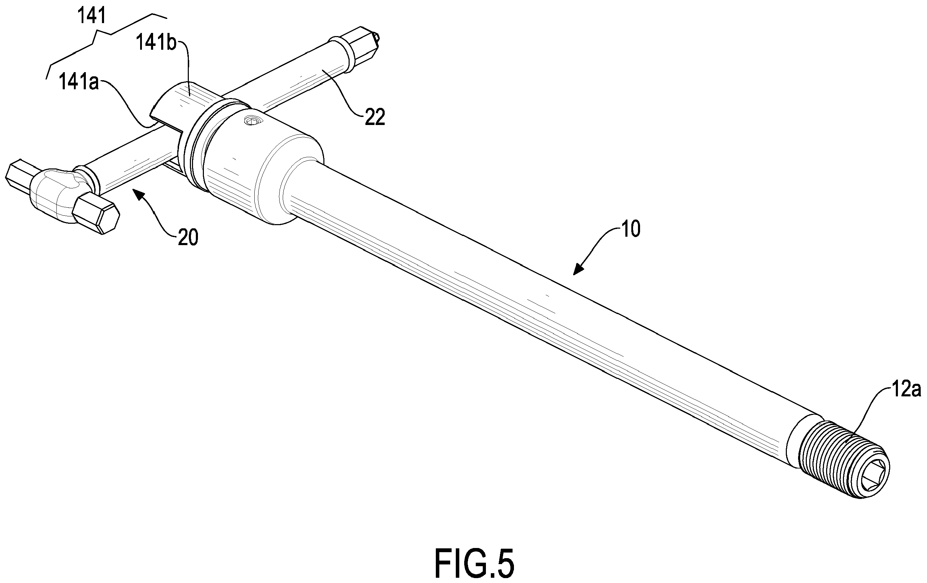

Additionally, the receiving groove 141 has two side openings 141a aligned with each other. With reference to Fig. 5, when the rod portion 22 of the handle 20 is removed from the axial hole 10a, the rod portion 22 is able to be located in the two side openings 141a of the receiving groove 141. With the rod portion 22 located in the receiving groove 141, users can screw the threaded section 12a of the quick release assembly 10 onto the bicycle frame or unscrew the threaded section 12a from the bicycle frame by pulling the handle 20 to abut against one of two side walls 141b of the receiving groove 141.

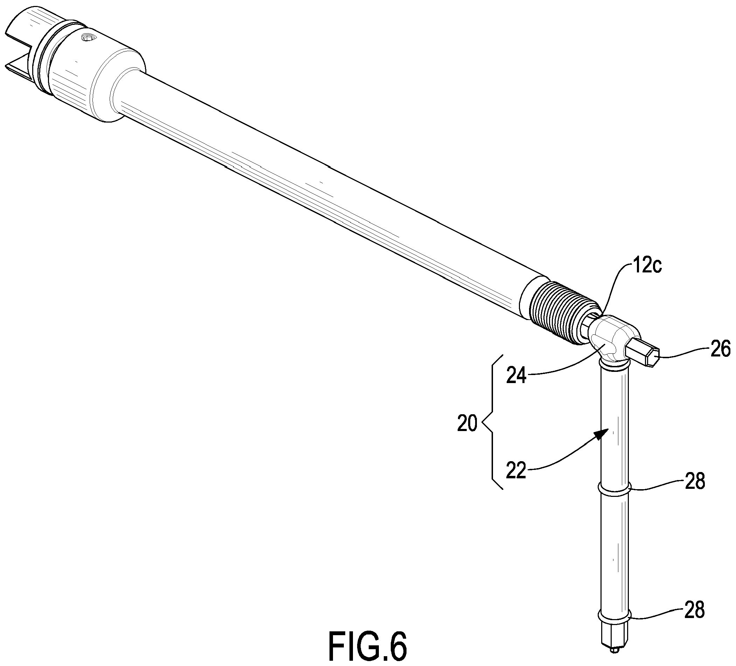

With reference to Figs. 3 and 6, the shaft 12 of the quick release assembly 10 further has a mounting hole 12c located near the threaded section 12a. The mounting hole 12c is in a shape fitting with a shape of one of the three tool portions 26. In this embodiment, the shape of one of the tool portions 26 that are disposed on the head portion 24 fits with the shape of the mounting hole 12c. Thus, that tool portion 26 can be combined with the mounting hole 12c to screw the quick release assembly 10 onto the bicycle frame or to unscrew the quick release assembly 10 from the bicycle frame.

Other said tool portions 26 are capable of being combined with a threaded component to screw the threaded component onto an object or to unscrew the threaded component from the object. For examples, any one of the three tool portions 26 is capable of being combined with a bolt to screw the bolt onto the bicycle frame or to unscrew the bolt from the bicycle frame, and this disclosure is not limited thereto.

In the first embodiment, to ensure the handle 20 is stably received in the axial hole 10a of the quick release assembly 10 when the handle 20 is not in use, with reference to Fig. 4, the handle 20 has several flexible rings 28 sheathed thereon. When the rod portion 22 is received in the axial hole 10a, the several flexible rings 28 abut against an inner peripheral surface of the axial hole 10a, which increases a friction force between the rod portion 22 of the handle 20 and the shaft 12 of the quick release assembly 10.

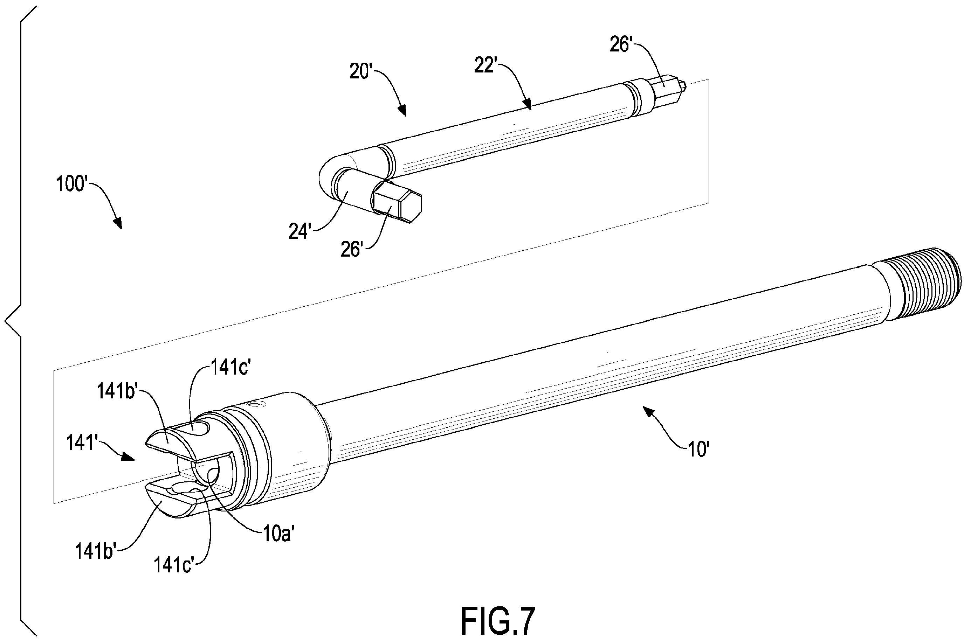

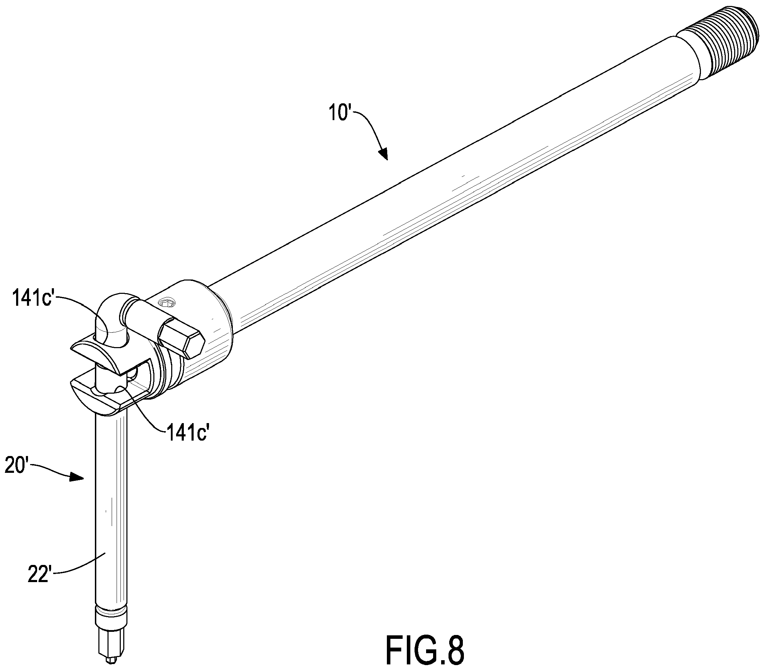

With reference to Figs. 7 and 8, a bicycle wheel quick release device capable of being combined with a tool 100' of a second preferred embodiment in accordance with the present invention differs from the first preferred embodiment in that: the receiving groove 141' of the bicycle wheel quick release device capable of being combined with a tool 100' further has two side walls 141b' and two combining holes 141c'. The two combining holes 141c' are each formed through a respective one of two side walls 141b' of the receiving groove 141', and are aligned with each other. When the rod portion 22' is removed from the axial hole 10a', the rod portion 22' is able to be mounted through the two combining holes 141c'. When the rod portion 22' is mounted through the two combining holes 141c', users can pull the handle 20' to abut against two inner peripheral surfaces of the two combining holes 141c'. Compared to the operating form of the rod portion 22 located in the receiving groove 141 of the first preferred embodiment shown in Fig. 5, the operating form of the second preferred embodiment shown in Fig. 8 increases the stability of the rotation driven by pulling the handle 20'.

In addition, in the second preferred embodiment, the handle 20' is a one-piece component and has a bended configuration. The head portion 24' of the handle 20' has only one said tool portion 26', and the rod portion 22' has one said tool portion 26' away from the head portion 24'. Accurately, the handle 20' has two said tool portions 26'. Furthermore, components of the first preferred embodiment and the second preferred embodiment can be matched alternatively. For examples, users can match the quick release assembly 10 of the first preferred embodiment with the handle 20' of the second preferred embodiment or match the quick release assembly 10' of the second preferred embodiment with the handle 20 of the first preferred embodiment, but this disclosure is not limited thereto.

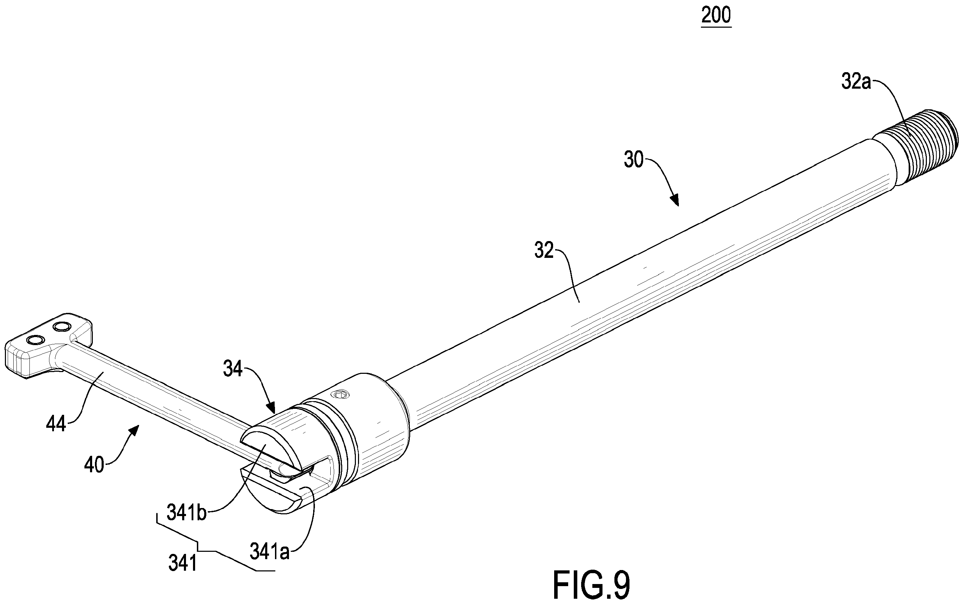

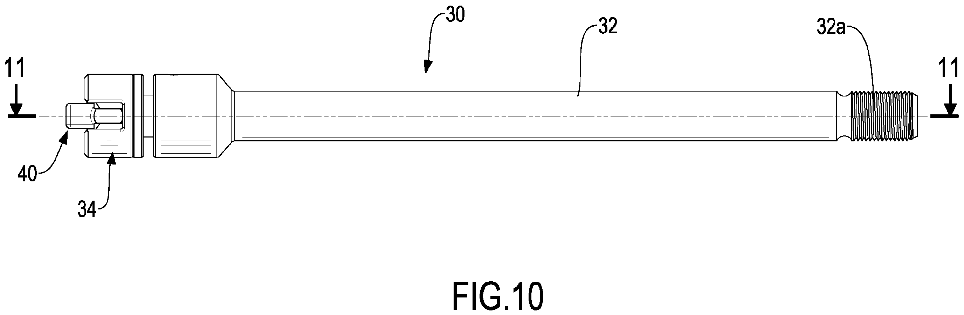

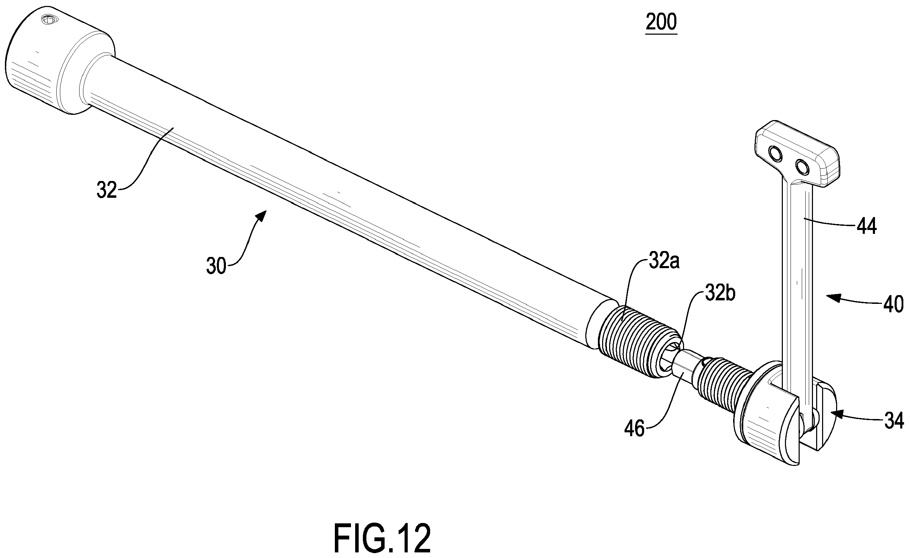

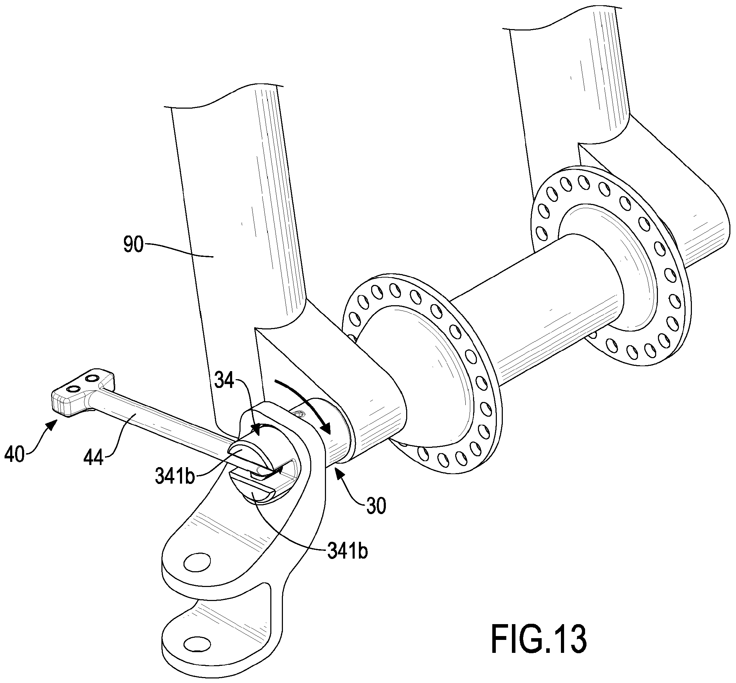

With reference to Figs. 9 to 12, a bicycle wheel quick release device capable of being combined with a tool 200 of a third preferred embodiment in accordance with the present invention is shown. The bicycle wheel quick release device capable of being combined with a tool 200 has the quick release assembly 30 and the handle 40. The quick release assembly 30 has the shaft 32, the cap 34, and the axial hole 30a. The receiving groove 341 of the cap 34 has two side openings 341a aligned with each other, and the receiving groove 341 communicates with the axial hole 30a. Differences between the third preferred embodiment and the first preferred embodiment are described below. In the third preferred embodiment, the handle 40 is pivotally connected to the cap 34 of the quick release assembly 30. The handle 40 has a rod portion 42 mounted through the cap 34 of the quick release assembly 30 and an operating arm 44 swingably connected to an end of the rod portion 42. The operating arm 44 is swingable relative to the cap 34 and protrudes out of one of the two side openings 341a of the receiving groove 341. With reference to Fig. 13, the quick release assembly 30 can be screwed onto a front fork 90 of a bicycle frame, and users can rotate the quick release assembly 30 by pulling the operating arm 44 of the handle 40 to abut against one of two side walls 341b of the receiving groove 341, which increases the convenience of operation.

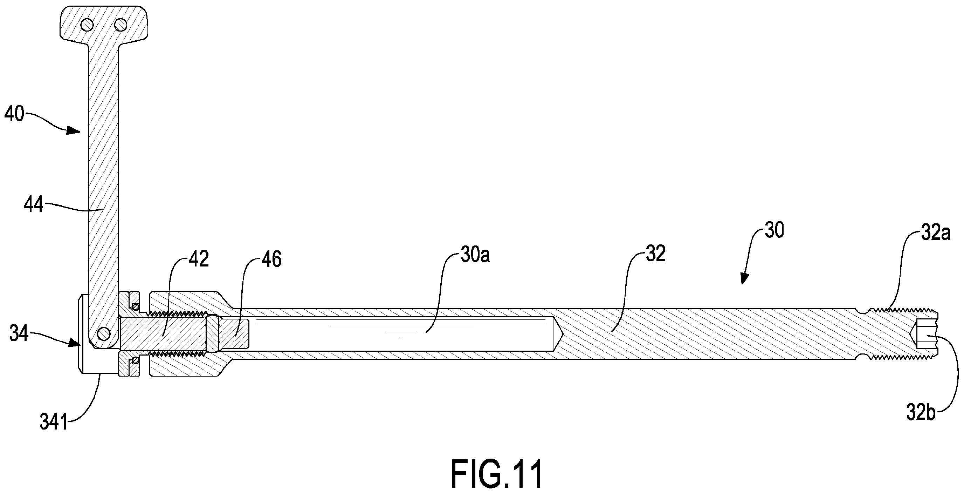

Besides, the handle 40 has a tool portion 46. The tool portion 46 is disposed at an end of the rod portion 42 located away from the operating arm 44, but this disclosure is not limited thereto. The tool portion 46 is capable of being received in the axial hole 30a. With reference to Figs. 9 and 11, the shaft 32 has the threaded section 32a and the mounting hole 32b which are located on an end away from the operating arm 44. The threaded section 32a is configured to be combined with a bicycle frame; the mounting hole 32b is in a shape fitting with that of the tool portion 46. When users detach the cap 34 from the shaft 32 via the handle 40, the tool portion 46 of the handle 40 is exposed from the cap 34. The tool portion 46 is thus able to be combined with the mounting hole 32b to screw the quick release assembly 30 onto the bicycle frame or unscrew the quick release assembly 30 from the bicycle frame.

In summary, the bicycle wheel quick release device capable of being combined with a tool 100, 100', 200 of the present invention allows users to use the handle 20, 20', 40 not only to detach or mount the quick release assembly 10, 10', 30 from or onto a bicycle frame but also to detach or mount a threaded component from or onto an object. The present invention thus provides users with the bicycle wheel quick release device capable of being combined with a tool 100, 100', 200 that has the multifunctional handle 20, 20', 40. Besides, in the first preferred embodiment, the handle 20 is able to be stored in the quick release assembly 10 when the handle 20 is not in use.

## Claims

1. A bicycle wheel quick release device capable of being combined with a tool (100, 100'), **characterized in that** the bicycle wheel quick release device capable of being combined with a tool (100, 100') comprises:
a quick release assembly (10, 10') having
a shaft (12, 12');
an axial hole (10a, 10a') defined inside the quick release assembly (10, 10'); and
a cap (14, 14') connected to the shaft (12, 12') and having
a receiving groove (141, 141') communicating with the axial hole (10a, 10a'); and
a handle (20, 20') having
a rod portion (22, 22') movably received in the axial hole (10a, 10a');
a head portion (24, 24') connected to an end of the rod portion (22, 22') and being capable of being received in the receiving groove (141, 141') of the cap (14, 14'); and
at least two tool portions (26, 26') respectively located on the rod portion (22, 22') and the head portion (24, 24') and being capable of being combined with a threaded component to screw the threaded component onto an object or to unscrew the threaded component from the object.

2. The bicycle wheel quick release device capable of being combined with a tool (100, 100') as claimed in claim 1, wherein
the shaft (12, 12') has
a threaded section (12a, 12a') configured to be combined with a bicycle frame; and
a mounting hole (12c, 12c'); and
one of the at least two tool portions (26, 26') is in a shape fitting with a shape of the mounting hole (12c, 12c') and is configured to be combined with the mounting hole (12c, 12c') to screw the quick release assembly (10, 10') onto the bicycle frame or to unscrew the quick release assembly (10, 10') from the bicycle frame.

3. The bicycle wheel quick release device capable of being combined with a tool (100) as claimed in claim 1, wherein
the receiving groove (141) has two side openings (141a) aligned with each other; and
the rod portion (22) is able to be located in the two side openings (141a) of the receiving groove (141a) when the rod portion (22) is removed from the axial hole (10a).

4. The bicycle wheel quick release device capable of being combined with a tool (100) as claimed in claim 1, wherein
the head portion (24) of the handle (20) has a through hole (24a) being noncircular;
the handle (20) has a tool rod (27);
at least part of the tool rod (27) is in a shape fitting with a shape of the through hole (24a);
the tool rod (27) is mounted through the through hole (24a) and has two opposite ends; and
each one of the two opposite ends of the tool rod (27) protrudes out of the through hole (24a) and forms a respective one of the at least two tool portions (26).

5. The bicycle wheel quick release device capable of being combined with a tool (100') as claimed in claim 1, wherein
the receiving groove (141') has
two side walls (141b'); and
two combining holes (141c') each formed through a respective one of the two side walls (141b') and aligned with each other; and
the rod portion (22') is able to be mounted through the two combining holes (141c') when the rod portion (22') is removed from the axial hole (10a').

6. A bicycle wheel quick release device capable of being combined with a tool (200), **characterized in that** the bicycle wheel quick release device capable of being combined with a tool (200) comprises:
a quick release assembly (30) having
a shaft (32);
an axial hole (30a) axially defined inside the quick release assembly (30); and
a cap (34) connected to the shaft (32) and having
a receiving groove (341) communicating with the axial hole (30a) and having
two side openings (341a) aligned with each other; and
a handle (40) pivotally connected to the cap (34) of the quick release assembly (30) and having
a rod portion (42) mounted through the cap (34) of the quick release assembly (30);
an operating arm (44) connected to an end of the rod portion (42), being swingable relative to the cap (34), and protruding out of one of the two side openings (341a) of the receiving groove (341); and
a tool portion (46) disposed on the rod portion (42), being capable of being received in the axial hole (30a), and being capable of being combined with a threaded component to screw the threaded component onto an object or unscrew the threaded component from the object.

7. The bicycle wheel quick release device capable of being combined with a tool (200) as claimed in claim 6, wherein
the shaft (32) has
a threaded section (32a) configured to be combined with a bicycle frame; and
a mounting hole (32b) being in a shape fitting with a shape of the tool portion (46); and
the tool portion (46) is capable of being combined with the mounting hole (32b) to screw the quick release assembly (30) onto the bicycle frame or to unscrew the quick release assembly (30) from the bicycle frame.
